# FASCICULE DE BREVET EUROPEEN

(11) **EP 2 791 036 B1**
(45) Date de publication et mention de la délivrance du brevet: **23.09.2015**
(21) Numéro de dépôt: 12794373.6
(22) Date de dépôt: 25.10.2012
(51) Int. Cl.: B65H 29/12, B65H 29/52, B65H 29/58

(54) **DISPOSITIF DE CONVOYAGE POUR OBJETS PLATS SUR CHANT ET MACHINE DE TRI POSTAL**
FÖRDERVORRICHTUNG FÜR FLACHE GEGENSTÄNDE AUF EINER KANTE UND POSTSORTIERMASCHINE
CONVEYING DEVICE FOR FLAT OBJECTS ON EDGE, AND MAIL-SORTING MACHINE

(30) Priorité: 13.12.2011 FR 1161558
(43) Date de publication de la demande: 22.10.2014
(73) Titulaire: Solystic, 92220 Bagneux (FR)
(72) Inventeur: BERLIET, Damien, 26500 Bourg Les Valence (FR); DE SOUSA, Olivier, 26120 Montmeyran (FR); CARON, Arnaud, 31000 Toulouse (FR)
(74) Mandataire: Prugneau, Philippe
(86) Numéro de dépôt international: PCT/FR2012/052457
(87) Numéro de publication internationale: WO 2013/088009

(56) Documents cités:
- EP-A2- 1 344 736
- DE-B3-102007 007 813
- FR-A1- 2 787 773
- US-A- 4 431 179
- US-A1- 2003 094 749

## Description

### Domaine technique

L'invention concerne de façon générale un dispositif de convoyage pour objets plats sur chant comportant au moins une courroie arrière et une courroie avant définissant une première zone de pincement pour convoyer les objets plats selon une première trajectoire, le dispositif de convoyage comportant au moins une rive de convoyage pourvue d'une première plaque de glissement destinée à soutenir les objets plats convoyés selon la première trajectoire.

L'invention concerne également une machine de tri postal pour objets plats sur chant comportant un tel dispositif de convoyage.

Au sens de l'invention, un objet plat désigne notamment, mais non exclusivement, un envoi postal. Les envois postaux, susceptibles d'être empilés grâce au dispositif de l'invention, peuvent présenter des dimensions variables, mais également des caractéristiques mécaniques variables, en particulier en ce qui concerne leur rigidité. Ces envois postaux peuvent être, entre autres, une lettre simple, un magazine, une enveloppe avec ou sans fenêtre, un journal, ou encore un catalogue présenté dans une enveloppe en matière plastique ou en papier, avec ou sans soufflet.

### Technique antérieure

Les dispositifs de convoyage pour objets plats sur chant sont couramment utilisés, notamment dans le domaine des machines de tri postal. De tels dispositifs comportent généralement deux courroies motorisées prévues en regard l'une de l'autre et définissant entre elles une zone de pincement au travers de laquelle les objets plats sont convoyés. Un tel dispositif connu comporte une courroie de pied recevant le chant des objets plats et deux courroies latérales motorisées se faisant face et définissant entre elles la zone de pincement. De manière connue, les courroies sont de type sans fin et guidées par des poulies. Pour assurer une zone de pincement adaptée à la variation d'épaisseur des objets plats les uns entre les autres, les courroies peuvent être sollicitées, en regard de la zone de pincement, par l'appui de roues élastiques dites basse pression. De manière à assurer le bon maintien pendant le convoyage d'objets plats de grandes dimensions, chaque courroie latérale peut être double et comporter ainsi deux courroies réparties sur la hauteur des objets plats. Toutefois, les objets plats grands et mous ont tendance à se déformer entre les courroies, risquant de provoquer des bourrages et/ou d'être endommagés. Selon un autre mode de réalisation, il est connu d'utiliser une courroie disposée en regard d'une rive de convoyage fixe, la courroie et la rive de convoyage définissant la zone de pincement. Ainsi, la déformation des objets plats mous et de grandes dimensions est limitée. Toutefois, la zone de pincement est peu accessible et, en cas de bourrage, il est difficile d'intervenir. Une solution intermédiaire est présentée par la publication FR 2 787 773 qui décrit un dispositif de convoyage pour objets plats mous. Ce dispositif de convoyage comporte une sole de pied recevant le chant des objets plats, une première courroie latérale de largeur importante disposée en regard de guides fixes répartis en hauteur sur la largeur de la première courroie pour retenir les objets plats mous verticaux. Ce dispositif de convoyage comporte également une seconde courroie, de largeur inférieure à celle de la première courroie, disposée en regard de la première courroie, du même coté des objets postaux que les guides fixes. Ce dispositif de convoyage permet ainsi de maintenir sur toute leur hauteur les objets plats mous de grandes dimensions. Toutefois, ce dispositif de convoyage ne permet pas d'offrir un accès facile à la zone de pincement et de faciliter le débourrage.

Les autres dispositifs de convoyage connus, tels que ceux décrits par exemple dans les publications US 4,431,179, DE 10 2007 007 813, US 2003/0 084 749 et EP 1 344 736 n'apportent pas de solution satisfaisante.

### Exposé de l'invention

Le but de l'invention est de remédier à cet inconvénient en proposant un dispositif de convoyage pour objets plats sur chant permettant un convoyage fiable des objets plats même lorsqu'ils sont de grandes dimensions et mous, facilitant l'accès à la zone de pincement pour faciliter le débourrage et réaliser les opérations de maintenance.

A cet effet, l'invention a pour objet un dispositif de convoyage pour objets plats sur chant comportant au moins une courroie arrière et une courroie avant définissant une première zone de pincement pour convoyer les objets plats selon une première trajectoire, le dispositif de convoyage comportant au moins une rive de convoyage pourvue d'une première plaque de glissement destinée à soutenir lesdits objets plats convoyés selon la première trajectoire, caractérisé en ce que la rive de convoyage est montée mobile entre une position de travail dans laquelle elle est située dans l'environnement proche de la première zone de pincement, la première plaque de glissement étant sensiblement alignée avec la première zone de pincement ; et une position escamotée dans laquelle elle est éloignée de la première zone de pincement, la première plaque de glissement étant désalignée de la première zone de pincement pour autoriser l'accès à la première zone de pincement, le dispositif de convoyage comportant au moins un axe d'actionnement agencé pour guider la rive de convoyage selon une liaison pivot glissant entre ses positions de travail et escamotée.

L'idée à la base de l'invention est de prévoir une rive de convoyage escamotable pour pouvoir successivement guider de manière fiable les objets plats puis être dégagée pour favoriser l'accès à la zone de pincement pour réaliser des opérations de maintenance et/ou de débourrage d'objets plats coincés.

Le dispositif de convoyage selon l'invention peut avantageusement présenter les particularités suivantes :
- le dispositif de convoyage peut comporter au moins une forme de calage en creux et un doigt de calage aptes à coopérer l'un avec l'autre pour empêcher le pivotement de la rive de convoyage par rapport à l'axe d'actionnement lorsque la rive de convoyage est dans sa position de travail et au début de sa translation pour passer de sa position de travail à sa position escamotée, l'une des formes de calage et doigt de calage étant prévus sur le bâti portant la première zone de pincement, l'autre sur la rive de convoyage ;
- la rive de convoyage comporte au moins une plaque de calage s'étendant sensiblement perpendiculairement à la première plaque de glissement, la plaque de calage étant pourvue de la forme de calage, et en ce que le bâti comporte le doigt de calage ;
- la rive de convoyage comporte au moins une plaque de manutention distincte de la plaque de calage et s'étendant sensiblement perpendiculairement de la première plaque de glissement, la plaque de manutention comportant au moins une ouverture traversante facilitant la préhension de la rive de convoyage pour la déplacer manuellement entre ses positions de travail et escamotée ;
- la plaque de calage et la plaque de manutention comportent chacune au moins un orifice traversant, les orifices traversant étant sensiblement coaxiaux entre eux et aptes à recevoir l'axe d'actionnement de sorte à former la liaison pivot coulissant ;
- au moins un brin de la courroie avant s'éloigne angulairement de la courroie arrière d'un premier angle, le dispositif de convoyage comportant au moins une courroie intermédiaire apte à définir avec la courroie avant une seconde zone de pincement pour convoyer les objets plats selon une seconde trajectoire, la rive de convoyage comportant une seconde plaque de glissement, angulairement distincte de la première plaque de glissement d'un second angle sensiblement égal au premier angle et destinée, dans la position de travail de la rive de convoyage, à être sensiblement alignée avec la seconde zone de pincement pour soutenir les objets plats convoyés selon une seconde trajectoire ;
- les première et seconde plaques de glissement sont reliées entre elles par la plaque de calage et par la plaque de manutention ;
- la forme de calage est prévue à l'extrémité libre de la plaque de calage à l'opposé de l'axe d'actionnement.

L'invention concerne également une machine de tri postal pour objets plats sur chant comprenant un dispositif de convoyage tel que décrit précédemment.

### Description sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :

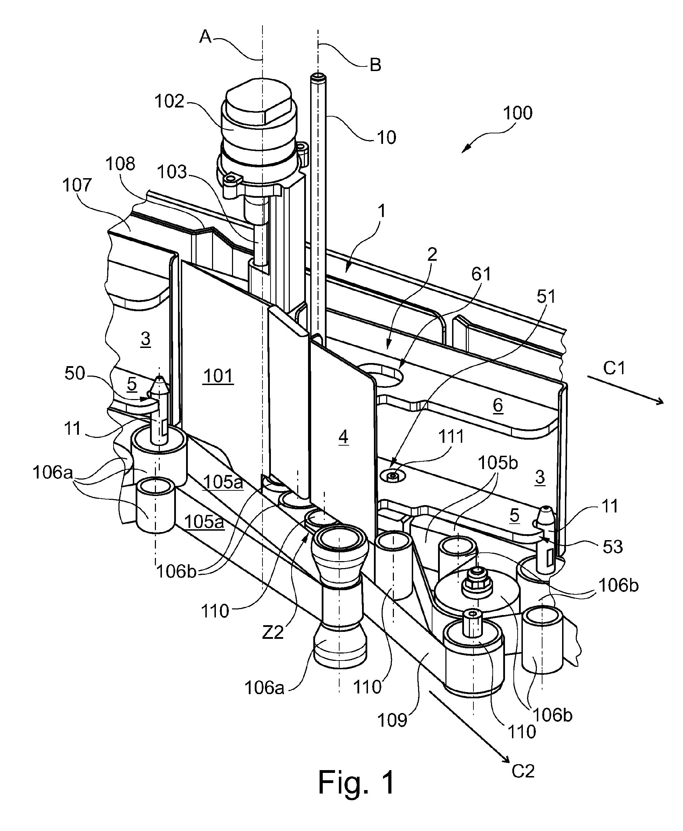

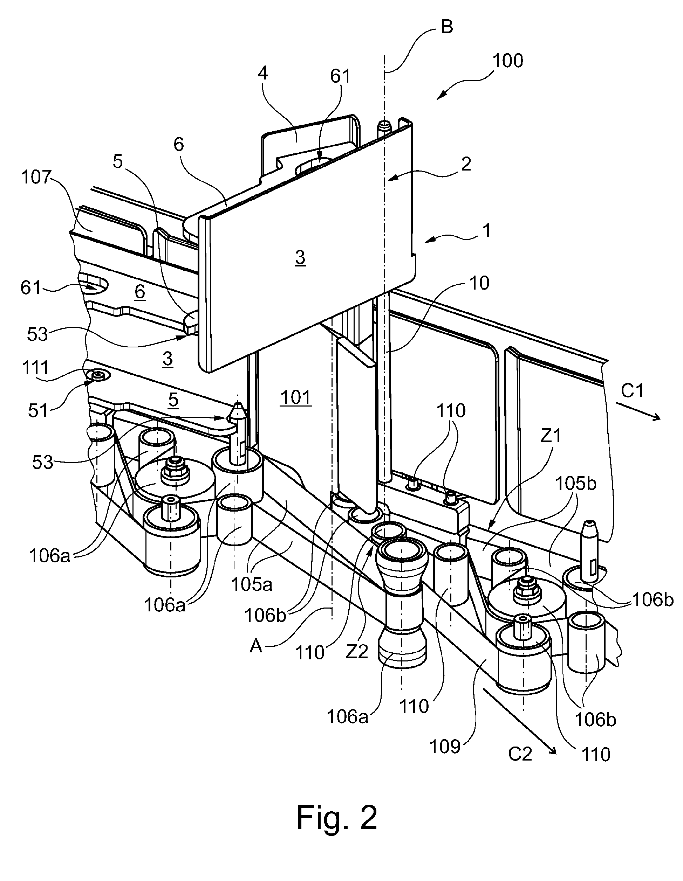

- les figures 1 et 2 sont des vues respectivement en perspective d'une partie d'une machine de tri postal comportant un dispositif de convoyage selon l'invention, la rive de convoyage étant représentée respectivement dans une position de travail et une position escamotée ; le volet de séparation étant dans sa première position ;

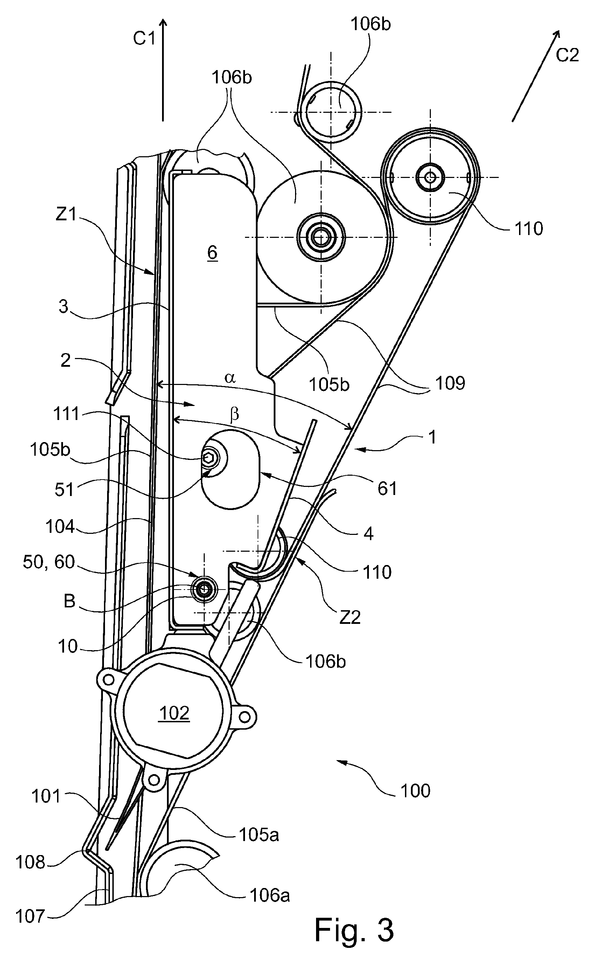

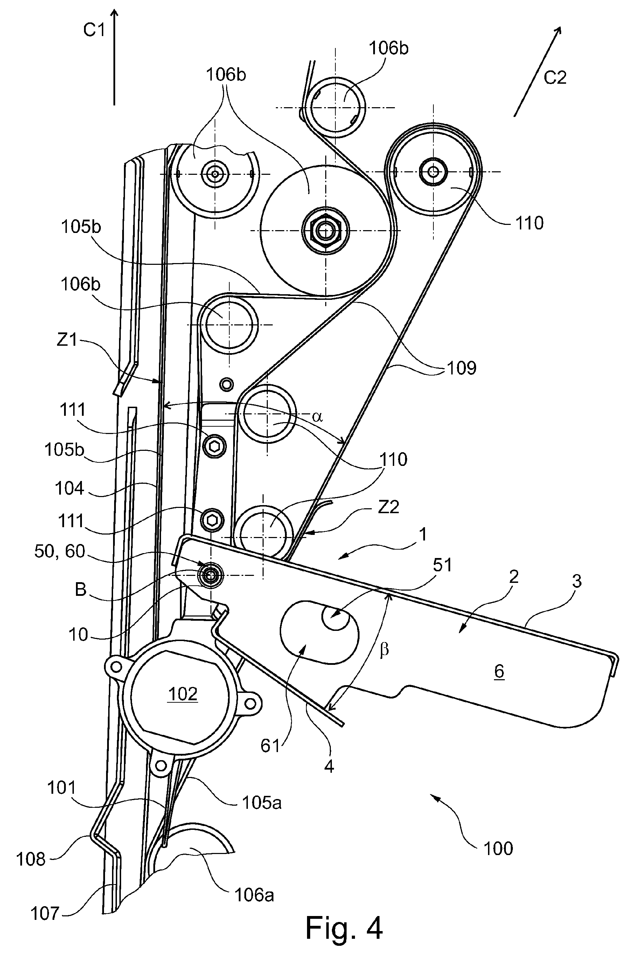

- les figures 3 et 4 sont des vues de dessus du dispositif de convoyage des figures 1 et 2, la rive de convoyage étant représentée respectivement dans une position de travail et une position escamotée, le volet de séparation étant respectivement dans une seconde, première position.

### Description des modes de réalisation

En référence aux figures 1 à 4, le dispositif de convoyage 1 selon l'invention est destiné à être intégré dans une machine de tri postal 100 comportant des moyens de convoyage et des moyens de guidage d'objets plats (non représentés) sur chant, ainsi que des volets de séparation 101 pour orienter les objets plats vers des sorties de tri (non représentées), selon un plan de tri prédéterminé. Les moyens de convoyage comportent une pluralité de courroies guidées par des poulies portées par un bâti (non représenté) et les moyens de guidage comportent notamment des plaques de convoyage généralement fixes.

Le dispositif de convoyage 1 comporte des premiers moyens de convoyage couplés à des premiers moyens de guidage pour déplacer des objets plats selon une première trajectoire symbolisée par les flèches C1. La machine de tri postal 100 comporte également des seconds moyens de convoyage couplés à des seconds moyens de guidage pour déplacer des objets plats selon une seconde trajectoire symbolisée par les flèches C2 et s'éloignant de la première trajectoire C1 en partant d'une bifurcation en laquelle, le volet de séparation 101 est monté pivotant, autour d'un axe de pivotement A, entre :
- une première position (visible sur la figure 4) dans laquelle il n'interfère pas avec la première trajectoire C1, autorisant ainsi le convoyage des objets plats au moyen des premiers moyens de convoyage selon cette première trajectoire C1, et
- une seconde position (visible sur la figure 3) dans laquelle il coupe la première trajectoire C1 de sorte à diriger les objets plats selon la seconde trajectoire C2 pour qu'ils soient convoyés au moyen des seconds moyens de convoyage.

Le pivotement du volet de séparation 101 peut être obtenu par le moteur ou actionneur 102 (visible sur la figure 1) relié au volet de séparation 101 par la tige de pivotement 103 (visible sur la figure 1).

Les premiers moyens de convoyage comportent notamment une courroie arrière 104 et des courroies avant 105a, 105b disposées successivement le long de la courroie arrière 104. La courroie arrière 104 et les courroies avant 105a, 105b sont de type sans fin, motorisées, et portées respectivement par des poulies principales (non représentées) et des poulies avant 106a, 106b de sorte à pincer les objets plats pour les transporter selon la première trajectoire C1, en amont et jusqu'à la bifurcation au moyen d'une première courroie avant 105a et en aval de la bifurcation au moyen d'une seconde courroie avant 105b. Les premiers moyens de guidage comporte une plaque arrière 107 fixe pourvue d'un renfoncement 108 pour recevoir l'extrémité du volet de séparation 101 dans sa seconde position.

Les seconds moyens de convoyage comportent notamment les courroies avant 105a, 105b décrites précédemment dans leurs portions s'éloignant de la bifurcation selon un premier angle α (visible sur les figures 3 et 4), par exemple de 24°, et des courroies intermédiaires 109 dont seule une est représentée. Les courroies intermédiaires 109 sont de type sans fin et portées par des poulies intermédiaires 110. Les courroies avant 105a, 105b et courroies intermédiaires 109 ont des brins en regard les uns des autres aptes à pincer les objets plats pour les transporter selon la seconde trajectoire C2 en aval de la bifurcation.

Le dispositif de convoyage selon l'invention comporte en outre une rive de convoyage 2 portée par une tige 10 solidaire du bâti et sensiblement perpendiculaire aux trajectoires principale et secondaire C1, C2. La tige 10 est de préférence cylindrique et lisse et définit un axe d'actionnement B.

La rive de convoyage 2 comporte une première plaque de glissement 3 et une seconde plaque de glissement 4, séparées angulairement l'une de l'autre par un second angle β (visible sur les figures 3 et 4) sensiblement égal au premier angle α. Les première et seconde plaques de glissement 3, 4 définissent ainsi une forme en V. Elles sont reliées par une plaque de calage 5 et par une plaque de manutention 6 sensiblement parallèles entre elles et s'étendant chacune perpendiculairement entre les première et seconde plaques de glissement 3, 4. La plaque de calage 5 et la plaque de manutention 6 comportent chacune au moins un orifice traversant 50, 60 de sorte que les deux orifices traversant 50, 60 soient coaxiaux. Ces orifices traversant 50, 60 sont de préférence sensiblement cylindriques et d'un diamètre permettant de recevoir la tige 10 avec laquelle ils forment une liaison pivot coulissant. Ainsi, la rive de convoyage 2 peut être montée pivotante et coulissante sur la tige 10. Les arêtes amont et aval des première et seconde plaques de glissement 3, 4 peuvent être recourbées autour des plaque de calage 5 et plaque de manutention 6 pour éviter de créer des angles rentrant et limiter les risques de bourrage. Par ailleurs, la plaque de calage 5 peut comporter des trous 51 aptes à recevoir par exemple des têtes d'écrou 111 de sorte à ne pas gêner l'accès de la rive de convoyage 2 à sa position de travail.

Dans sa position basse, dite de travail, la rive de convoyage 2 est orientée de sorte que les première et seconde plaques de glissement 3, 4 soient positionnées en regard respectivement des courroie arrière 104 et courroie avant 105b et des courroie intermédiaire 109 et courroie avant 105a pour former les zones de pincement des objets plats selon respectivement la première et la seconde trajectoires C1, C2. Dans cette position basse, il est avantageux que la rive de convoyage 2 ne soit pas mobile angulairement pour assurer un guidage efficace. Pour ce faire, l'extrémité libre de la plaque de calage 5 comporte une forme de calage 53 en creux apte à recevoir un doigt de calage 11 prévu sur le bâti pour empêcher le pivotement de la rive de convoyage 2. De plus, dans la position de travail, la rive de convoyage 2 est dans un environnement très encombré par les poulies et courroies nécessaires au convoyage des objets plats. En cas de bourrage survenant derrière la rive de convoyage 2 et/ou pour réaliser des opérations de maintenance, il peut être nécessaire d'accéder à la zone arrière située à l'arrière de la rive de convoyage 2, entre la rive de convoyage 2 et la courroie arrière 104. Aussi, la rive de convoyage 2 est escamotable entre sa position de travail et une position escamotée. Pour ce faire, il convient de translater la rive de convoyage 2 le long de la tige 10 jusqu'à ce qu'elle soit dégagée de l'environnement encombré. Au début de ce déplacement, la translation est guidée par la coopération entre la forme de calage 53 et le doigt de calage 11. Ensuite, lorsque la rive de convoyage 2 est dégagée, il convient de la faire pivoter autour de l'axe d'actionnement B, vers sa position de travail dans laquelle ses première et seconde plaques de glissement 3, 4 ne sont plus dans l'alignement respectif des courroie arrière 104 et courroie avant 105b et des courroie intermédiaire 109 et courroie avant 105a. La zone arrière de la rive de convoyage 2 est ainsi libre d'accès.

Pour faciliter le déplacement de la rive de convoyage 2, la plaque de manutention 6 prévue au-dessus de la plaque de calage 5 peut être pourvue d'une ouverture traversante 61 autorisant le passage d'un doigt ou d'un outil.

Comme il ressort en particulier des figures 1 et 2, la machine de tri postal 100 selon l'invention peut comporter plusieurs sorties de tri dont seule une est représentée, à l'amont de chacune desquelles est prévue un volet de séparation 101 et une rive de convoyage 3. Pour cette raison, sur ces figures 1 et 2, on peut observer une rive de convoyage 3 amont et une rive de convoyage 3 aval similaire et indépendante l'une de l'autre et repérées avec les mêmes références.

## Revendications

1. Dispositif de convoyage (1) pour objets plats sur chant comportant au moins une courroie arrière (104) et une courroie avant (105a, 105b) définissant une première zone de pincement (Z1) pour convoyer lesdits objets plats selon une première trajectoire (C1), ledit dispositif de convoyage (1) comportant au moins une rive de convoyage (2) pourvue d'une première plaque de glissement (3) destinée à soutenir lesdits objets plats convoyés selon ladite première trajectoire (C1), **caractérisé en ce que** ladite rive de convoyage (2) est montée mobile entre une position de travail dans laquelle elle est située dans l'environnement proche de ladite première zone de pincement (Z1), ladite première plaque de glissement (3) étant sensiblement alignée avec ladite première zone de pincement (Z1) ; et une position escamotée dans laquelle elle est éloignée de ladite première zone de pincement (Z1), ladite première plaque de glissement (3) étant désalignée de ladite première zone de pincement (Z1) pour autoriser l'accès à ladite première zone de pincement (Z1), **en ce que** ledit dispositif de convoyage (1) comporte au moins un axe d'actionnement (B) agencé pour guider ladite rive de convoyage (2) selon une liaison pivot glissant entre ses positions de travail et escamotée.

2. Dispositif de convoyage (1) selon la revendication précédente, **caractérisé en ce qu'**il comporte au moins une forme de calage (53) en creux et un doigt de calage (11) aptes à coopérer l'un avec l'autre pour empêcher le pivotement de ladite rive de convoyage (2) par rapport audit axe d'actionnement (B) lorsque ladite rive de convoyage (2) est dans sa position de travail et au début de sa translation pour passer de sa position de travail à sa position escamotée, l'un desdits forme de calage (53) et doigt de calage (11) étant prévu sur un bâti portant ladite première zone de pincement (Z1), l'autre sur ladite rive de convoyage (2).

3. Dispositif de convoyage (1) selon la revendication précédente, **caractérisé en ce que** ladite rive de convoyage (2) comporte au moins une plaque de calage (5) s'étendant sensiblement perpendiculairement à ladite première plaque de glissement (3), ladite plaque de calage (5) étant pourvue de ladite forme de calage (53), et **en ce que** ledit bâti comporte ledit doigt de calage (11).

4. Dispositif de convoyage (1) selon la revendication précédente, **caractérisé en ce que** ladite rive de convoyage (2) comporte au moins une plaque de manutention (6) distincte de ladite plaque de calage (5) et s'étendant sensiblement perpendiculairement de ladite première plaque de glissement (3), ladite plaque de manutention (6) comportant au moins une ouverture traversante (61) facilitant la préhension de ladite rive de convoyage (2) pour la déplacer manuellement entre ses positions de travail et escamotée.

5. Dispositif de convoyage (1) selon les revendications 1, 3 et 4, **caractérisé en ce que** ladite plaque de calage (5) et ladite plaque de manutention (6) comportent chacune au moins un orifice traversant (50, 60), lesdits orifices traversant (50, 60) étant sensiblement coaxiaux entre eux et aptes à recevoir ledit axe d'actionnement (B) de sorte à former ladite liaison pivot coulissant.

6. Dispositif de convoyage (1) selon au moins l'une des revendications précédentes, **caractérisé en ce qu'**au moins un brin de ladite courroie avant (105a, 105b) s'éloigne angulairement de ladite courroie arrière (104) d'un premier angle (α), **en ce que** ledit dispositif de convoyage (1) comporte au moins une courroie intermédiaire (109) apte à définir avec ladite courroie avant (105a, 105b) une seconde zone de pincement (Z2) pour convoyer lesdits objets plats selon une seconde trajectoire (C2), **en ce que** ladite rive de convoyage (2) comporte une seconde plaque de glissement (4), angulairement distincte de ladite première plaque de glissement (3) d'un second angle (β) sensiblement égal audit premier angle (α) et destinée, dans ladite position de travail de ladite rive de convoyage (2), à être sensiblement alignée avec ladite seconde zone de pincement (Z2) pour soutenir lesdits objets plats convoyés selon une seconde trajectoire (C2).

7. Dispositif de convoyage (1) selon les revendications 5 et 6, **caractérisé en ce que** lesdites première et seconde plaques de glissement (3, 4) sont reliées entre elles par ladite plaque de calage (5) et par ladite plaque de manutention (6).

8. Dispositif de convoyage (1) selon la revendication 7, **caractérisé en ce que** ladite forme de calage (53) est prévue à l'extrémité libre de ladite plaque de calage (5) à l'opposé dudit axe d'actionnement (B).

9. Machine de tri postal (100) pour objets plats sur chant, **caractérisé en ce qu'**elle comprend au moins un dispositif de convoyage (1) selon au moins l'une des revendications précédentes.

## Patentansprüche

1. Fördervorrichtung (1) für flache, hochkantgestellte Gegenstände, umfassend mindestens ein hinteres Band (104) und ein vorderes Band (105a, 105b), die einen ersten Klemmbereich (Z1) zum Fördern der flachen Gegenstände entlang einer ersten Bahn (C1) definieren, wobei die Fördervorrichtung (1) mindestens eine Förderleiste (2) aufweist, die mit einer ersten Gleitplatte (3) ausgestattet ist, die dazu bestimmt ist, die flachen Gegenstände, die entlang der ersten Bahn (C1) gefördert sind, zu stützen, **dadurch gekennzeichnet, dass** die Förderleiste (2) beweglich zwischen einer Arbeitsposition, in der sie in der nahen Umgebung des ersten Klemmbereichs (Z1) angeordnet ist, wobei die erste Gleitplatte (3) im Wesentlichen mit dem ersten Klemmbereich (Z1) aufgerichtet ist, und einer eingezogenen Position, in der sie von dem ersten Klemmbereich (Z1) entfernt ist, montiert ist, wobei die erste Gleitplatte (3) zu dem ersten Klemmbereich (Z1) versetzt ist, um den Zugriff auf den ersten Klemmbereich (Z1) zu ermöglichen, dass die Fördervorrichtung (1) mindestens eine Betätigungsachse (B) aufweist, die angeordnet ist, um die Förderleiste (2) nach einer gleitenden Drehverbindung zwischen ihrer Arbeitsposition und ihrer eingezogenen Position zu führen.

2. Fördervorrichtung (1) nach dem vorhergehenden Anspruch, **dadurch gekennzeichnet, dass** sie mindestens eine hohle Klemmform (53) und einen Klemmfinger (11) aufweist, die geeignet sind, um miteinander zusammenzuwirken, um das Schwenken der Förderleiste (2) in Bezug auf die Betätigungsachse (B) zu verhindern, wenn sich die Förderleiste (2) in ihrer Arbeitsposition und am Anfang ihrer Translation befindet, um von ihrer Arbeitsposition in ihre eingezogene Position überzugehen, wobei von der Klemmform (53) und dem Klemmfinger (11) jeweils einer auf einem Gestell, das den ersten Klemmbereich (Z1) trägt, und der andere auf der Förderleiste (2) vorgesehen ist.

3. Fördervorrichtung (1) nach dem vorhergehenden Anspruch, **dadurch gekennzeichnet, dass** die Förderleiste (2) mindestens eine Klemmplatte (5) aufweist, die sich im Wesentlichen senkrecht zu der ersten Gleitplatte (3) erstreckt, wobei die Klemmplatte (5) mit der Klemmform (53) ausgestattet ist, und dass das Gestell den Klemmfinger (11) aufweist.

4. Fördervorrichtung (1) nach dem vorhergehenden Anspruch, **dadurch gekennzeichnet, dass** die Förderleiste (2) mindestens eine Handhabungsplatte (6) aufweist, die sich von der Klemmplatte (5) unterscheidet und sich im Wesentlichen senkrecht zu der ersten Gleitplatte (3) erstreckt, wobei die Handhabungsplatte (6) mindestens eine Durchgangsöffnung (61) aufweist, die das Greifen der Förderleiste (2) erleichtert, um sie manuell zwischen der Arbeitsposition und der eingezogenen Position zu verschieben.

5. Fördervorrichtung (1) nach den Ansprüchen 1, 3 und 4, **dadurch gekennzeichnet, dass** die Klemmplatte (5) und die Handhabungsplatte (6) jeweils mindestens ein Durchgangsloch (50, 60) aufweisen, wobei die Durchgangslöcher (50, 60) im Wesentlichen untereinander koaxial sind und geeignet sind, die Betätigungsachse (B) aufzunehmen, um die gleitende Drehverbindung zu bilden.

6. Fördervorrichtung (1) nach mindestens einem der vorhergehenden Ansprüche, **dadurch gekennzeichnet, dass** sich mindestens ein Strang des vorderen Bandes (105a, 105b) von dem hinteren Band (104) in einem ersten Winkel (α) winkelmäßig entfernt, dass die Fördervorrichtung (1) mindestens ein Zwischenband (109) aufweist, das geeignet ist, mit dem vorderen Band (105a, 105b) einen zweiten Klemmbereich (Z2) zu definieren, um die flachen Gegenstände entlang einer zweiten Bahn (C2) zu fördern, dass die Förderleiste (2) eine zweite Gleitplatte (4) aufweist, die sich winkelmäßig von der ersten Gleitplatte (3) um einen zweiten Winkel (β) unterscheidet, der im Wesentlichen gleich dem ersten Winkel (α) ist, und dazu bestimmt ist, in der Arbeitsposition der Förderleiste (2) im Wesentlichen mit dem zweiten Klemmbereich (Z2) ausgerichtet zu sein, um die flachen Gegenstände zu stützen, die entlang einer zweiten Bahn (C2) gefördert werden.

7. Fördervorrichtung (1) nach den Ansprüchen 5 und 6, **dadurch gekennzeichnet, dass** die erste und die zweite Gleitplatte (3, 4) durch die Klemmplatte (5) und durch die Handhabungsplatte (6) miteinander verbunden sind.

8. Fördervorrichtung (1) nach Anspruch 7, **dadurch gekennzeichnet, dass** die Klemmform (53) an dem freien Ende der Klemmplatte (5) gegenüber von der Betätigungsachse (B) vorgesehen ist.

9. Postsortiermaschine (100) für flache, hochkantgestellte Gegenstände, **dadurch gekennzeichnet, dass** sie mindestens eine Fördervorrichtung (1) nach mindestens einem der vorhergehenden Ansprüche aufweist.

## Claims

1. A conveyor device (1) for conveying flat articles on edge, including at least one back belt (104) and at least one front belt (105a, 105b) that define a first nip zone (Z1) for conveying said flat articles along a first path (C1), said conveyor device (1) including at least one conveying strip (2) provided with a first slide plate (3) serving to support said flat articles being conveyed along said first path (C1), **characterized in that** said conveying strip (2) is mounted to move between a working position in which it is situated in the environment close to said first nip zone (Z1), said first slide plate (3) being substantially aligned with said first nip zone (Z1), and a retracted position, in which it is remote from the first nip zone (Z1), said slide plate (3) being taken out of alignment with said first nip zone (Z1) for the purpose of allowing access to said first nip zone (Z1), and **in that** said conveyor device (1) has at least one actuation axis (B) arranged to guide the conveying strip (2) along a sliding pivot coupling between its working and retracted positions.

2. A conveyor device (1) according to the preceding claim, **characterized in that** it is provided with at least one recessed keying shape (53) and with at least one keying finger (11), the shape and the finger being suitable for co-operating with each other to prevent said conveying strip (2) from pivoting about said actuation axis (B) when said conveying strip (2) is in its working position and at the start of its movement in translation for going from its working position to its retracted position, one of the elements constituted by said keying shape (53) and said keying finger (11) being provided on a frame carrying said first nip zone (Z1), and the other of them being provided on said conveying strip (2).

3. A conveyor device (1) according to the preceding claim, **characterized in that** said conveying strip (2) is provided with at least one keying plate (5) extending substantially perpendicularly to said first slide plate (3), said keying plate (5) being provided with said keying shape (53), and **in that** said frame is provided with said keying finger (11).

4. A conveyor device (1) according to the preceding claim, **characterized in that** said conveying strip (2) is provided with at least one handling plate (6) distinct from said keying plate (5) and extending substantially perpendicularly to said first slide plate (3), said handling plate (6) being provided with at least one through opening (61) making it easier to take hold of said conveying strip (2) so as to move it manually between its working position and its retracted position.

5. A conveyor device (1) according to claims 1, 3, and 4, **characterized in that** said keying plate (5) and said handling plate (6) each have at least one through orifice (50,60), said through orifices (50,60) being substantially in alignment with each other so that they share the same axis and being suitable for receiving said actuation axis (B) so as to form said sliding pivot coupling.

6. A conveyor device (1) according to at least one of the preceding claims, **characterized in that** at least one run of said front belt (105a, 105b) diverges from said back belt (104) at a first angle (α), **in that** said conveyor device (1) includes at least one intermediate belt (109) suitable for co-operating with said front belt (105a,105b) to define a second nip zone (Z2) for conveying said flat articles along a second path (C2), and **in that** said conveying strip (2) is provided with a second slide plate (4) that diverges from said first slide plate (3) at a second angle (β) that is substantially equal to said first angle (α) and that, when said conveying strip (2) is in said first working position, is designed to be substantially aligned with said second nip zone (Z2) so as to support said flat articles being conveyed along a second path (C2).

7. A conveyor device (1) according to claim 5 and claim 6, **characterized in that** said first and second slide plates (3, 4) are connected together by said keying plate (5) and by said handling plate (6).

8. A conveyor device (1) according to claim 7, **characterized in that** said keying shape (53) is provided at the free end of said keying plate (5) opposite from said actuation axis (B).

9. A postal sorting machine (100) for sorting flat articles on edge, said postal sorting machine being **characterized in that** it comprises at least one conveyor device (1) according to at least one of the preceding claims.
